(19) Europäisches Patentamt
European Patent Office
Office européen des brevets

(11) **EP 0 563 815 B1**

(12) **EUROPÄISCHE PATENTSCHRIFT**

(45) Veröffentlichungstag und Bekanntmachung des Hinweises auf die Patenterteilung:
**07.02.1996 Patentblatt 1996/06**

(51) Int. Cl.[6]: **C08F 4/654**, C08F 10/00

(21) Anmeldenummer: **93105012.4**

(22) Anmeldetag: **26.03.1993**

(54) **Verfahren zur Herstellung einer Kugelförmigen Katalysatorkomponente**

Process for preparing a spherical catalytic component

Procédé de préparation d'une composante sphérique de catalyseur

(84) Benannte Vertragsstaaten:
**AT BE CH DE DK ES FR GB GR IE IT LI LU NL PT SE**

(30) Priorität: **28.03.1992 DE 4210205**

(43) Veröffentlichungstag der Anmeldung:
**06.10.1993 Patentblatt 1993/40**

(73) Patentinhaber: **HOECHST AKTIENGESELLSCHAFT D-65926 Frankfurt am Main (DE)**

(72) Erfinder: **Thum, Gerhard, Dr.**
**W-6238 Hofheim (Taunus) (DE)**

(56) Entgegenhaltungen:
**EP-A- 0 232 643          WO-A-92/00332**

Bemerkungen:
Die Akte enthält technische Angaben, die nach dem Eingang der Anmeldung eingereicht wurden und die nicht in dieser Patentschrift enthalten sind.

EP 0 563 815 B1

**Beschreibung**

Die vorliegende Erfindung betrifft ein Verfahren zur Herstellung einer kugelförmigen Katalysatorkomponente auf Basis Magnesiumchlorid, mit welcher erhebliche Vereinfachungen und Vorteile bei der Handhabung und Verarbeitung der damit erzeugten polymeren Produkte erzielt werden.

Es ist bekannt, daß rundes Magnesiumchlorid bei der Verwendung der daraus hergestellten Katalysatoren eine geringe Stabilität zeigt gegen mechanische Einwirkungen, wie sie beispielsweise beim kontinuierlichen Eintrag des Katalysators in einem kontinuierlichen Polymerisationsverfahren durch die dazu notwendige Katalysatorpumpe auftreten. Dadurch kommt es zur Zerstörung der kugelförmigen Struktur der Katalysatorteilchen. Man erhält bei der Polymerisation von Olefinen (speziell Ethylen) keine gleichmäßigen sphärischen Polymerpartikel, sondern ein Pulver von unregelmäßiger Struktur und mit hohem Feinanteil. Weiterhin lassen sich die bekannten kugelförmigen Katalysatorkomponenten im trocknen Zustand nur schlecht dosieren, beispielsweise bei der Gasphasenpolymerisation.

Es ist weiterhin bekannt, einen kugelförmigen Polymerisationskatalysator, welcher durch Umsetzung einer magnesiumorganischen Verbindung mit einem Elektronendonator, einer organischen Chlorverbindung und einer Übergangsmetallverbindung entstanden ist, durch Umhüllung der Katalysatorpartikel mit einem Polyolefin durch Präpolymerisation vor dem Zerfallen zu schützen (vgl. EP 232 643). Allerdings kann die Leistungsfähigkeit dieses Katalysatorsystems nicht befriedigen. Außerdem muß das Präpolymerisat einer aufwendigen Nachbehandlung mit einem "sphéroprotecteur" unterworfen werden.

Bekannt ist auch ein Verfahren zur Herstellung eines Polyolefins durch Polymerisation von alpha-Olefinen in Gegenwart eines Katalysators, dessen Übergangsmetallkomponente A entstanden ist durch

a) Umsetzung einer magnesiumorganischen Verbindung der Formel $R^2MgR^1$ mit einer aluminiumorganischen Verbindung der Formel $AlR^3{}_n(OR^4)_{3-n}$ , oder dem Umsetzungsprodukt von Aluminiumtrialkylen oder Aluminiumdialkylhydriden mit Diolefinen, und einem aliphatischen primären Chlorkohlenwasserstoff,
b) Behandlung des erhaltenen Feststoffs mit einem Elektronendonator, und
c) Umsetzung des so erhaltenen Trägermaterials mit einer Verbindung des Titans oder Zirkoniums der Formel $MeX_m(OR^5)_{4-m}$ (vgl. DE 36 20 060).

Diese Übergangsmetallkomponente besitzt jedoch nur eine geringe Stabilität gegen mechanische Beanspruchung.

Schließlich ist ein Verfahren zur Herstellung eines Polyolefins bekannt, bei welchem alpha-Olefine in Gegenwart eines Katalysators polymerisiert werden, dessen Komponente A ohne Abtrennung von Zwischenprodukten hergestellt wurde durch

a) Umsetzung einer speziellen magnesiumorganischen Verbindung mit einem aliphatischen Chlorkohlenwasserstoff,
b) Behandlung der so erhaltenen Suspension mit einem Elektronendonator bei einer Temperatur von 0 bis 100°C, und
c) Umsetzung des so erhaltenen Trägermaterials mit einer Titanverbindung , wobei man kugelförmige Teilchen erhält, die zu Polymeren mit kugelförmigen Teilchen führen (vgl. DE 40 19 925).

Auch diese Komponente A besitzt nur eine geringe Stabilität gegen mechanische Einwirkungen.

Es wurde nun gefunden, daß eine hochaktive kugelförmige und zugleich mechanisch stabile Katalysatorkomponente A erhalten werden kann, wenn man einen speziellen Katalysatorfeststoff vor der eigentlichen Polymerisation durch eine Präpolymerisation mit einer dünnen Schutzschicht aus Polyethylen umhüllt.

Die Erfindung betrifft somit ein Verfahren zur Herstellung einer kugelförmigen, ein Übergangsmetall enthaltenden Katalysatorkomponente (Komponente A des Katalysators) auf Basis einer magnesiumorganischen Verbindung, einer organischen Chlorverbindung, gegebenenfalls einer aluminiumorganischen Verbindung, einem Elektronendonator und einer Übergangsmetallverbindung und Umhüllung der Katalysatorpartikel mit einem Polyethylen durch Präpolymerisation, dadurch gekennzeichnet, daß man zur Präpolymerisation einen Katalysatorfeststoff einsetzt, der ohne Abtrennung von Zwischenprodukten hergestellt wurde durch

a) Umsetzung einer magnesiumorganischen Verbindung der Formel $R^1MgR^2$, worin $R^1$ und $R^2$ gleiche oder verschiedene Alkylreste mit 2 bis 12 C-Atomen sind, mit 0,5 bis 2,5 mol eines aliphatischen primären Chlorkohlenwasserstoffs, bezogen auf 1 mol der magnesiumorganischen Verbindung, bei einer Temperatur von 30 bis 110°C,
b) Behandlung der so erhaltenen Suspension mit einem Elektronendonator in einer Menge von 0,1 bis 1 mol pro mol des im Feststoff enthaltenen Magnesiums bei einer Temperatur von 0 bis 100°C, und
c) Umsetzung des so erhaltenen Trägermaterials mit einer Verbindung der Formel $MX_m(OR^5)_{4-m}$, worin M Titan oder Zirkonium, $R^5$ ein Alkylrest mit 2 bis 10 Kohlenstoffatomen, X ein Halogenatom und m eine ganze Zahl von 0 bis 4

2

ist, in einer Menge von 0,5 bis 2 mol pro mol des im Trägermaterial enthaltenen Magnesiums bei einer Temperatur von 30 bis 120°C.

Zunächst wird ein kugelförmiger Feststoff gebildet. Dazu wird eine magnesiumorganische Verbindung mit einem aliphatischen primären Chlorkohlenwasserstoff und gegebenenfalls mit einer aluminiumorganischen Verbindung umgesetzt.

Die magnesiumorganische Verbindung ist ein Magnesiumdialkyl der Formel $R^1MgR^2$, wobei $R^1$ und $R^2$ gleiche oder verschiedene Alkylreste mit 2 bis 12 C-Atomen sind. Beispiele sind Di-n-butylmagnesium, Di-n-octylmagnesium, n-Butyl-n-octylmagnesium, n-Butyl-ethylmagnesium, n-Butyl-s-butylmagnesium oder Gemische dieser Verbindungen. Bevorzugt sind Verbindungen der Formel

$$[(n\text{-}C_4H_9)_{1,2\text{-}1,7}(n\text{-}C_8H_{17})_{0,3\text{-}0,8}\ Mg],\ \text{insbesondere}\ [(n\text{-}C_4H_9)_{1,5}(n\text{-}C_8H_{17})_{0,5}\ Mg].$$

Als aliphatischer primärer Chlorkohlenwasserstoff geeignet ist beispielsweise Tetrachlorkohlenstoff, Chloroform, Methylenchlorid, 1-Chlorpropan oder 1,1,1-Trichlorethan, wobei auch Gemische eingesetzt werden können. Bevorzugt verwendet werden Chloroform und Tetrachlorkohlenstoff.

Als aluminiumorganische Verbindung ist geeignet eine Alkyl- oder Alkoxyaluminiumverbindung der Formel $AlR^3_n(OR^4)_{3\text{-}n}$, worin $R^3$ und $R^4$ gleiche oder verschiedene Alkylreste mit 1 bis 8 C-Atomen sind und n 0, 1, 2 oder 3 bedeutet. Ebenso geeignet ist auch das Umsetzungsprodukt von Aluminiumtrialkylen oder Aluminiumdialkylhydriden mit 1 bis 6 C-Atome enthaltenden Diolefinen, vorzugsweise Isopren. Beispielsweise sei Aluminiumisoprenyl genannt. Bei Gegenwart der aluminiumorganischen Verbindung enthält der Ansatz bis zu 0,15 mol, bevorzugt bis zu 0,10 mol der aluminiumorganischen Verbindung.

Zur Darstellung des kugelförmigen Feststoffs wird die magnesiumorganische Verbindung und gegebenenfalls die aluminiumorganische Verbindung in einem inerten, flüssigen Kohlenwasserstoff unter Stickstoff- oder Argonatmosphäre gelöst. Diese Lösung wird unter gleichmäßigem Rühren bei einer Temperatur von 30 bis 110°C, bevorzugt von 40 bis 80°C, mit einer Lösung des Chlorkohlenwasserstoffes zusammengebracht. Die Umsetzung kann in der Weise durchgeführt werden, daß man den Chlorkohlenwasserstoff zu der Lösung der magnesiumorganischen Verbindung und gegebenenfalls der aluminiumorganischen Verbindung in dem flüssigen Kohlenwasserstoff gibt, oder umgekehrt.

Bei dieser Umsetzung kann sowohl die Reaktionszeit als auch der Verdünnungsgrad der Reaktanten in weiten Grenzen variiert werden. Die Reaktionszeit beträgt 30 min bis zu mehreren Stunden, vorzugsweise 1 Stunde bis 5 Stunden. Die Reaktanten werden als 0,5 bis zu 15 molare Lösungen eingesetzt. Der Ansatz enthält bis zu 2,5 mol, bevorzugt bis zu 2,0 mol des Chlorkohlenwasserstoffs, bezogen auf ein mol magnesiumorganische Verbindung.

Der entstehende suspendierte Feststoff besteht im wesentlichen aus kugelförmigem Magnesiumchlorid und gegebenenfalls wenig Aluminiumchlorid.

Zu dieser Suspension des kugelförmigen Feststoffes gibt man nun einen Elektronendonator. Geeignete Elektronendonatoren sind sauerstoffhaltige Verbindungen des Siliciums, des Phosphors oder des Schwefels, Stickstoff- oder Siliciumverbindungen mit Alkyl- oder Arylresten mit 1 bis 8 C-Atomen, wie beispielsweise Triethylamin oder Hexamethyldisilan, oder aliphatische oder aromatische Ether mit gleichen oder unterschiedlichen organischen Resten. Bevorzugt verwendet werden Diethylsulfit und Diethoxydimethylsilan.

Der Elektronendonator wird im Molverhältnis 0,1 bis 1, bevorzugt 0,1 bis 0,6 mol, bezogen auf ein mol Magnesium bei einer Temperatur von 0 bis 100°C, bevorzugt von 60 bis 90°C, zu dem kugelförmigen Feststoff gegeben. Die Reaktionszeit beträgt in Abhängigkeit von der Reaktivität der Reaktanten 0,5 bis 3 Stunden, vorzugsweise bis zu 1 h.

Das auf diese Weise erhaltene kugelförmige Trägermaterial wird sofort unter Stickstoff- oder Argonatmosphäre umgesetzt mit einer Verbindung der Formel $MX_m(OR^5)_{4\text{-}m}$, worin $R^5$ ein Alkylrest mit 2 bis 10 C-Atomen ist, M Titan oder Zirkonium, X ein Halogenatom, bevorzugt Chlor ist, und m eine ganze Zahl von 0 bis 4, bevorzugt aber 2 oder 4 ist. Man kann ein Gemisch aus mehreren dieser Verbindungen einsetzen. Bevorzugte Verbindungen sind z.B. $TiCl_4$, $TiCl_3(OEt)$, $TiCl_3(O\text{-}iPr)$, $TiCl_2(OEt)_2$, $TiCl_2(O\text{-}iPr)_2$, $TiCl_2(O\text{-}CH_2C_6H_5)_2$. Ganz besonders bevorzugt ist $TiCl_4$.

Die Verbindung des Titans oder Zirkoniums wird in einer Menge von 0,5 bis 2 mol, bevorzugt 0,8 bis 1,8 mol, insbesondere 1 mol, bezogen auf ein mol Magnesium des kugelförmigen Trägermaterials, eingesetzt.

Die Reaktionstemperatur beträgt 30 bis 120°C, bevorzugt 60 bis 95°C und die Reaktionszeit beträgt in Abhängigkeit von der geforderten Belegung mit dem Übergangsmetall 30 min bis zu mehreren Stunden, bevorzugt 1 bis 2 Stunden.

Der auf diese Weise hergestellte Katalysatorfeststoff wird abschließend bei einer Temperatur von 0 bis 100°C, bevorzugt von 10 bis 50°C, durch wiederholtes Waschen mit einem inerten Kohlenwasserstoff von löslichen Verunreinigungen, wie Metall- oder Halogenverbindungen befreit.

Danach wird der kugelförmige Katalysatorfeststoff durch Präpolymerisation mit einer Polymerschutzschicht versehen. Dazu wird der Feststoff in einen Reaktor eingeführt, in welchem ein Suspensionsmittel und ein Aluminiumtrialkyl vorgelegt wurden.

Das Suspensionsmittel ist ein bei Olefinpolymerisationen übliches Lösemittel, beispielsweise ein gesättigter Kohlenwasserstoff mit 3 bis 15 C-Atomen, wie zum Beispiel Propan, Butane, Pentane, Hexane, Heptane, Cyclohexan oder Gemische derartiger Verbindungen.

Das Aluminiumtrialkyl ist ein solches mit 1 bis 20 C-Atomen in den Alkylresten.

Die Präpolymerisation wird bei einer Temperatur von 50 bis 110°C, vorzugsweise 50 bis 95°C, einem Druck von 0,5 bis 10 bar, vorzugsweise 0,5 bis 6 bar, während einer Zeit von 0,5 bis 3 h, vorzugsweise 0,5 bis 1,5 h durchgeführt.

Die erfindungsgemäß hergestellte Katalysatorkomponente A liegt in Form von kugelförmigen Teilchen vor, deren mittlerer Durchmesser 20 bis 110 $\mu$m, bevorzugt 40 bis 80 $\mu$m, beträgt und die ein Verhältnis von mittlerem Durchmesser in Masse, $D_m$, zu mittlerem Durchmesser in Zahl, $D_n$, von kleiner 1,5, vorzugsweise 1,01 bis 1,1 aufweisen.

Die Komponente A wird in Form einer Suspension in einem inerten Kohlenwasserstoff, oder aber nach Abtrennen des Suspensionsmittels trocken zur Polymerisation von alpha-Olefinen eingesetzt. Bevorzugt ist die Homopolymerisation von Ethylen oder Propylen oder die Copolymerisation von Ethylen mit einem $C_3$-$C_{10}$-alpha-Olefin oder von Propylen mit Ethylen oder einem $C_4$-$C_{10}$-alpha-Olefin mit einer oder mehreren Doppelbindungen, wie beispielsweise 1-Buten, Isobuten, 1-Hexen oder 1,3-Butadien.

Die Polymerisation kann sowohl kontinuierlich als auch diskontinuierlich in der Gasphase oder in Suspension durchgeführt werden. Im allgemeinen wird zusätzlich noch Wasserstoff als Molmassenregler eingesetzt.

Als Komponente B (Cokatalysator) dient eine Aluminiumverbindung der Formel $AlR^6{}_pY_{3-p}$, worin p 1, 2 oder 3 und $R^6$ ein Alkyl- oder Arylrest mit 1 bis 20 C-Atomen, Y ein Wasserstoffatom, ein Halogenatom oder eine $C_1$-$C_{20}$-Alkoxy- oder $C_6$-$C_{20}$-Aryloxygruppe ist. Beispiele sind halogenhaltige aluminiumorganische Verbindungen, wie Dialkylaluminiumhalogenide, Alkylaluminiumdihalogenide oder Alkylaluminiumsesquichloride, weiterhin Aluminiumtrialkyle oder Aluminiumalkylhydride, die allein oder im Gemisch eingesetzt werden können. Bevorzugt werden Aluminiumtrialkyle, wie beispielsweise Aluminiumtriethyl oder Aluminiumtriisobutyl, verwendet.

Die Polymerisationstemperatur beträgt 50 bis 150°C, bevorzugt 50 bis 100°C, und der Druck 1 bis 60 bar, vorzugsweise 3 bis 25 bar.

Die mittels der erfindungsgemäß hergestellten Katalysatorkomponente A hergestellten Polymerisate und Copolymerisate zeichnen sich durch eine kompakte, gleichmäßige kugelförmige Gestalt mit einer sehr engen Korngrößenverteilung aus. Das Verhältnis von mittlerem Durchmesser in Masse, $D_m$, zu mittlerem Druchmesser in Zahl, $D_n$, ist kleiner 1,5, vorzugsweise von 1,02 bis 1,3. Das Verhältnis D/d liegt im Bereich von 1,05 bis 1,2. Der Durchmesser des Polymerkorns liegt im Bereich von 100 bis 1000 $\mu$m, vorzugsweise 300 bis 800 $\mu$m. Die Polymeren besitzen eine hohe Schüttdichte und eine ausgezeichnete Verarbeitbarkeit.

Ein weiterer Vorteil der erfindungsgemäß hergestellten Katalysatorkomponente A ist ihre hohe mechanische Stabilität und ihre Dosierfähigkeit im trocknen Zustand. Außerdem besitzt sie eine hohe Kontaktaktivität, so daß nur sehr geringe Mengen des Katalysators für die Polymerisation notwendig sind. Dadurch müssen die Polymerisate auch keiner zusätzlichen Nachbehandlung, wie beispielsweise aufwendigen Wasch- oder Reinigungsoperationen, unterworfen werden. Weiterhin treten keine unerwünschten Verfärbungen des Produktes durch Katalysatorreste auf, die häufig zu einer Beeinträchtigung der Lichtstabilität der Polymeren führen können.

Der Restgehalt an Titan bzw. Zirkonium in den mittels der erfindungsgemäß hergestellten Katalysatorkomponente A gewonnenen Polymeren beträgt weniger als 5 ppm, häufig weniger als 3 ppm.

Vor allem aber werden durch die kugelförmige Gestalt und die damit verbundene sehr gute Rieselfähigkeit der Polymerisate und Copolymerisate erhebliche Vereinfachungen und Vorteile bei der Handhabung, Trocknung und Verarbeitung erzielt.

Die Erfindung wird nachfolgend durch die Beispiele näher erläutert.

Der Schmelzindex MFI 190/5 wurde nach DIN 53735 bei 190°C und bei einer Belastung von 5 kp bestimmt.

Das Verhältnis $D_m$ zu $D_n$ wurde nach NF X 11-630 vom Juni 1981 bestimmt:

$D_m = [\Sigma n_i(D_i)^3 D_i]/[\Sigma n_i(D_i)^3]$

$D_n = [\Sigma n_i D_i]/\Sigma n_i$

$n_i$ = Anzahl i der Proben gleichen Durchmessers

$D_i$ = Durchmesser der i-ten Probe

Die Korngrößenverteilung $D_m/D_n$ der Komponente A wurde mittels Bildanalyse mit einem IBAS 1 ermittelt.

Die Korngrößenverteilung $D_m/D_n$ des Polymerisates wurde mittels Siebanalyse nach DIN 4188 ermittelt.

Vergleichsbeispiel A

200 cm³ einer Lösung von Di-n-butylmagnesium in Heptan (entsprechend 105 mmol Mg) wurden mit 10,5 mmol Aluminiumtriethyl versetzt. Das Gemisch wurde unter intensivem Rühren innerhalb von 90 min bei 45 ± 10°C zu einer Mischung aus 165 mmol 1-Chlorpropan und 30 cm³ Benzin getropft. Der Ansatz wurde weitere 3 h bei 80°C gerührt und der Feststoff fünfmal mit insgesamt 1200 cm³ Benzin ausgewaschen.

Man erhielt einen kugelförmigen Feststoff mit einem mittleren Durchmesser $d_{50}$ von 60 $\mu$m.

$Mg : Cl : Al = 1 : 2,14 : 0,04 ; D_m/D_n = 1,13 ; D/d = 1,1.$

300 cm$^3$ einer Suspension des vorgenannten Feststoffes in Benzin 100/200 (entsprechend 80 mmol Mg) wurden bei 40°C mit 25 mmol Aluminium-tri-isopropylat versetzt, das Gemisch anschließend 2 h bei 95°C gerührt und die Suspension auf 50°C abgekühlt. Bei dieser Temperatur wurden innerhalb von 30 min 120 mmol Titantetrachlorid, gelöst in 20 cm$^3$ Benzin, zugetropft. Der Ansatz wurde weitere 4 h bei 90°C gerührt und der tiefviolette Niederschlag fünfmal mit je 200 cm$^3$ Benzin gewaschen.

Der kugelförmige Katalysatorfeststoff hatte einen mittleren Korndurchmesser $d_{50}$ von 60 µm.

$$Mg : Ti : CL : Al = 1 : 0,07 : 2,68 : 0,02;$$

$$D_m/D_n = 1,1.$$

Vergleichsbeispiel B

200 cm$^3$ einer Lösung von Butyl-octyl-magnesium in Heptan (entsprechend 185 mmol Mg) wurden zunächst mit 8,5 mmol Aluminium-tri-isopropylat versetzt und 40 min bei 50°C gerührt. Anschließend wurden innerhalb von 75 min bei 70 ± 5°C 370 mmol Chloroform zugetropft, der Ansatz 2 h bei 85°C gerührt und der kugelförmige Feststoff mit 800 cm$^3$ Benzin gewaschen.

$$Mg : Cl : Al = 1 : 2,2 : 0,06 ; d_{50} = 80 \ µm.$$

500 cm$^3$ einer Suspension des vorgenannten Feststoffes in Benzin (entsprechend 200 mmol Mg) wurden bei 20°C mit 80 mmol Diethylsulfit versetzt und 2 h bei 80°C gerührt. Die dunkelgraue Suspension wurde auf 50°C abgekühlt und der Feststoff mit 1300 cm$^3$ Benzin gewaschen. Anschließend wurden bei dieser Temperatur innerhalb von 30 min 230 mmol Titantetrachlorid zugetropft. Nachreaktion bei 95°C lieferte einen violetten, kugelförmigen Katalysatorfeststoff, der fünfmal mit je 200 cm$^3$ benzin gewaschen wurde.

$$Mg : Ti : Cl : Al = 1 : 0,07 : 2,28 : 0,02$$

$$D_m/D_n = 1,1 ; d_{50} = 80 \ µm.$$

Vergleichsbeispiel C

Zu 621 cm$^3$ einer Lösung einer Magnesiumverbindung mit der ungefähren Zusammensetzung $[(n-C_4H_9)_{1,5}(n-C_8H_{17})_{0,5}Mg]$, welche unter dem Namen BOMAG-A im Handel erhältlich ist, in Heptan (= 570 mmol Mg) wurden innerhalb von 90 min bei 70 - 80°C 55,3 cm$^3$ (= 570 mmol) $CCl_4$ zusammen mit 500 cm$^3$ Benzin (Sdp 100/120°C) gegeben. Anschließend wurde der Ansatz 120 min bei 85°C gerührt. Der helle, rotbraune, sphärische Feststoff wies ein Mg/Cl-Verhältnis von 1 zu 2,08 auf und konnte ohne weitere Aufarbeitung als Katalysatorträger eingesetzt werden.

Die erhaltene $MgCl_2$-Suspension (= 570 mmol Mg) wurde bei 85°C innerhalb von 5 min mit 31,9 cm$^3$ (= 250 mmol) Diethylsulfit versetzt und anschließend 60 min bei 85°C gerührt. Zu der dunkelbraunen Suspension wurden bei 85°C innerhalb von 20 min 62,8 cm$^3$ (= 570 mmol) $TiCl_4$ zugegeben und der Ansatz 120 min bei 95°C gerührt. Der dunkelviolette Katalysatorfeststoff wurde anschließend bei 60°C achtmal mit je 150 cm$^3$ Benzin (Sp 100/1200C) titanfrei gewaschen.

$$Mg : Ti : Cl = 1 : 0,130 : 2,28 ; d_{50} = 60 \ µm; D_m/D_n = 1,12.$$

Vergleichsbeispiel D

200 cm$^3$ Benzin (Sdp 100/120°C) und 98 cm$^3$ $CHCl_3$ (= 1210 mmol) wurden bei 70 - 75°C innerhalb von 90 min mit 656 cm$^3$ einer Lösung von der in Vergleichsbeispiel C genannten Mg-Verbindung in Heptan (= 570 mmol Mg) versetzt und anschließend noch 120 min bei 75 - 77°C gerührt. Der hellbraune, sphärische Feststoff wies ein Mg/Cl-Verhältnis von 1:1,97 auf.

Ein Teil der so erhaltenen Suspension (= 306 mmol Mg) wurde bei 82 - 84°C innerhalb von 10 min mit 17,2 cm$^3$ (= 135 mmol) Diethylsulfit versetzt und anschließend 60 min bei 84 - 85°C gerührt. Danach wurden 33,7 cm$^3$ (= 306 mmol) $TiCl_4$ während 20 min bei 85°C zugetropft und der Ansatz nochmals 120 min bei 85 - 88°C gerührt. Der violette, kugelförmige Katalysatorfeststoff wurde achtmal mit insgesamt 1300 cm$^3$ Benzin (Sdp 100/120°C) bei 55°C gewaschen.

$$Mg : Ti : Cl = 1 : 0,085 : 2,10 ; d_{50} = 55 \ µm ; D_m/D_n = 1,18.$$

Beispiel 1

In einem 1,5 dm³ Stahlautoklaven wurden 800 cm³ Benzin, 20 mmol Triethylaluminium und 10 mmol Titan des Katalysatorfeststoffes aus Vergleichsbeispiel C vorgelegt. Dann wurden 2,0 bar Stickstoff und 1,1 bar Wasserstoff aufgedrückt. Die Präpolymerisation fand bei 65°C innerhalb 60 min statt. In dieser Zeit wurden insgesamt 69 g Präpolymerisat mit einer kugelförmigen Struktur gebildet. Das Polymerisat wurde mit 500 cm³ Hexan gewaschen und in einem Rotationsverdampfer getrocknet.

$$\text{MFI } 190/5 = 750 \text{ g}/10 \text{ min; Dichte} = 1{,}061 \text{ g/cm}^3; \text{ SD} = 326 \text{ g/dm}^3; d_{50} = 53 \ \mu m.$$

Beispiel 2

Beispiel 1 wurde wiederholt, jedoch wurden statt 1,1 bar Wasserstoff nur 0,5 bar Wasserstoff eingesetzt. Man erhielt ein kugelförmiges Präpolymerisat mit einem MFI 190/5 von 95 g/10 min.

Beispiele 3 und 4

In einem 150 dm³ Stahlautoklaven wurden 100 dm³ Benzin und 30 mmol Triethylaluminium vorgelegt und 0,25 mmol Titan des Präpolymerisats aus Beispiel 1 bzw. 2 zugefügt. Der Reaktorinhalt wurde auf eine Temperatur von 85°C gebracht und während der Polymerisation soviel Wasserstoff eingeleitet, daß sein Gehalt im Gasraum 20 Vol-% betrug. Danach wurden innerhalb von 4 h 24 kg Ethylen und 500 cm³ Buten-1 in den Reaktor eingetragen. Nach Beendigung der Polymerisation erhielt man 24 kg Polyethylen, entsprechend einer Katalysatorausbeute von 96 kg Polyethylen pro mmol eingesetztem Titan oder ca. 65 kg PE pro g Katalysator. Beide Polymerisate, hergestellt mittels beider Präpolymerisate, hatten einen MFI 190/5 von 0,41 g/10 min.

$$d_{50} = 710 \ \mu m; \text{ SD} = 430 \text{ g/dm}^3; \text{ kein Feinanteil} < 200 \ \mu m; D_m/D_n = 1{,}12.$$

Beispiel 5

Mittels des Präpolymerisats aus Beispiel 1 wurde eine kontinuierliche Polymerisation von Ethylen durchgeführt. Dazu wurden kontinuierlich Ethylen, Wasserstoff, Buten-1, Triethylaluminium und Katalysatorkomponente A aus Beispiel 1 dem Reaktor zugeführt. Die Polymerisationstemperatur war 85°C, der Ethylenpartialdruck 3,0 bar und der Wasserstoffpartialdruck 2,9 bar. Man erhielt ein kugelförmiges Polymerisat. Kontaktausbeute 33 kg PE pro mmol Titan, MFI 190/5 = 2,9 g/10min.

$$d_{50} = 667 \ \mu m \ ; \text{ Feinanteil} < 100 \ \mu m \ 1 \ \% \ ; D_m/D_n = 1{,}19.$$

Vergleichsbeispiel E

Beispiel 5 wurde wiederholt, jedoch wurde der Katalysatorfeststoff aus Vergleichsbeispiel C verwendet. Man erhielt ein Polyethylen mit einem mittleren Korndurchmesser $d_{50}$ von 214 µm, der Feinanteil < 100 µm betrug 22 %. Das Polymerisat hatte nur noch teilweise eine Kugelform. Ausbeute und Schmelzindex entsprachen Beispiel 5.

Tabelle

| Vergleich der Siebanalysen | | | | | | | |
|---|---|---|---|---|---|---|---|
| Beisp. | <63 µm | <100 µm | <200 µm | <300 µm | <500 µm | <800 µm | <1000 µm |
| 5 | -- | 1 | 1,2 | 3,3 | 16 | 68 | 93 |
| E | 14 | 22 | 35 | 46 | 73 | 99,5 | 100 |

**Patentansprüche**

1. Verfahren zur Herstellung einer kugelförmigen, ein Übergangsmetall enthaltenden Katalysatorkomponente (Komponente A des Katalysators) auf Basis einer magnesiumorganischen Verbindung, einer organischen Chlorverbindung, gegebenenfalls einer aluminiumorganischen Verbindung, einem Elektronendonator und einer Übergangsmetallverbindung und Umhüllung der Katalysatorpartikel mit einem Polyethylen durch Präpolymerisation, dadurch gekennzeichnet, daß man zur Präpolymerisation einen Katalysatorfeststoff einsetzt, der ohne Abtrennung von Zwischenprodukten hergestellt wurde durch

a) Umsetzung einer magnesiumorganischen Verbindung der Formel $R^1MgR^2$, worin $R^1$ und $R^2$ gleiche oder verschiedene Alkylreste mit 2 bis 12 C-Atomen sind, mit 0,5 bis 2,5 mol eines aliphatischen primären Chlorkohlenwasserstoffs, bezogen auf 1 mol der magnesiumorganischen Verbindung, bei einer Temperatur von 30 bis 110°C,

b) Behandlung der so erhaltenen Suspension mit einem Elektronendonator in einer Menge von 0,1 bis 1 mol pro mol des im Feststoff enthaltenen Magnesium bei einer Temperatur von 0 bis 100°C, und

c) Umsetzung des so erhaltenen Trägermaterials mit einer Verbindung der Formel $MX_m(OR^5)_{4-m}$, worin M Titan oder Zirkonium, $R^5$ ein Alkylrest mit 2 bis 10 Kohlenstoffatomen, X ein Halogenatom und m eine ganze Zahl von 0 bis 4 ist, in einer Menge von 0,5 bis 2 mol pro mol des im Trägermaterial enthaltenen Magnesiums bei einer Temperatur von 30 bis 120°C.

2. Verfahren nach Anspruch 1, dadurch gekennzeichnet, daß die Umsetzung zwischen der magnesiumorganischen Verbindung mit dem aliphatischen primären Chlorkohlenwasserstoff in Gegenwart einer aluminiumorganischen Verbindung der Formel $AlR^3_n(OR^4)_{3-n}$, worin $R^3$ und $R^4$ gleiche oder verschiedene Alkylreste mit 1 bis 8 C-Atomen sind und n 0, 1, 2 oder 3 bedeutet, oder dem Umsetzungsprodukt von Aluminiumtrialkylen oder Aluminiumdialkylhydriden mit 1 bis 6 C-Atome enthaltenden Diolefinen in einer Menge von bis zu 0,15 mol aluminiumorganische Verbindung, bezogen auf ein mol der magnesiumorganischen Verbindung, durchgeführt wurde.

3. Verfahren nach Anspruch 1, dadurch gekennzeichnet, daß als magnesiumorganische Verbindung eine Verbindung der Formel $[(n\text{-}C_4H_9)_{1,2\text{-}1,7}(n\text{-}C_8H_{17})_{0,3\text{-}0,8}Mg]$ eingesetzt wurde.

4. Verfahren nach Anspruch 1, dadurch gekennzeichnet, daß als Elektronendonator Diethylsulfit oder Diethoxydimethylsilan eingesetzt wurde.

5. Verfahren nach Anspruch 1, dadurch gekennzeichnet, daß $TiCl_4$ eingesetzt wurde.

## Claims

1. A process for the preparation of a spherical, transition metal-containing catalyst component (component A of the catalyst) based on an organomagnesium compound, an organochlorine compound, if desired an organoaluminum compound, an electron donor and a transition-metal compound, and enveloping of the catalyst particles with a polyethylene by prepolymerization, which comprises carrying out the prepolymerization using a catalyst solid which has been prepared, without removal of intermediates, by

a) reaction of an organomagnesium compound of the formula $R^1MgR^2$ in which $R^1$ and $R^2$ are identical or different alkyl radicals having 2 to 12 carbon atoms, with from 0.5 to 2.5 mol of an aliphatic primary chlorinated hydrocarbon, based on 1 mol of the organomagnesium compound, at a temperature of from 30 to 110°C,

b) treatment of the resultant suspension with an electron donor in an amount of from 0.1 to 1 mol per mole of the magnesium present in the solid, at a temperature of from 0 to 100°C, and

c) reaction of the resultant support material with a compound of the formula $MX_m(OR^5)_{4-m}$ in which M is titanium or zirconium, $R^5$ is an alkyl radical having 2 to 10 carbon atoms, X is a halogen atom and m is an integer from 0 to 4, in an amount of from 0.5 to 2 mol per mole of the magnesium present in the support material, at a temperature of from 30 to 120°C.

2. The process as claimed in claim 1, wherein the reaction between the organomagnesium compound and the aliphatic primary chlorinated hydrocarbon was carried out in the presence of an organoaluminum compound of the formula $AlR^3_n(OR^4)_{3-n}$ in which $R^3$ and $R^4$ are identical or different alkyl radicals having 1 to 8 carbon atoms, and n is 0, 1, 2 or 3, or the product of the reaction of trialkylaluminum compounds or dialkylaluminum hydrides with diolefins containing 1 to 6 carbon atoms, in an amount of up to 0.15 mol of organoaluminum compound, based on one mole of the organomagnesium compound.

3. The process as claimed in claim 1, wherein the organomagnesium compound employed was a compound of the formula $[(n\text{-}C_4H_9)_{1,2\text{-}1,7}(n\text{-}C_8H_{17})_{0,3\text{-}0,8}Mg]$.

4. The process as claimed in claim 1, wherein the electron donor employed was diethyl sulfite or diethoxydimethylsilane.

5. The process as claimed in claim 1, wherein $TiCl_4$ was employed.

## Revendications

1. Procédé pour la préparation d'un constituant de catalyseur (constituant A de catalyseur) sphérique contenant un métal de transition à base d'un composé organo-magnésien, d'un composé organique de chlore, éventuellement d'un composé organique d'aluminium, d'un donneur d'électrons et d'un composé de métal de transition et revêtement des particules de catalyseur par prépolymérisation d'un polyéthylène, caractérisé en ce qu'on utilise pour la prépolymérisation une matière de catalyseur solide que l'on a préparée sans séparation des produits intermédiaires par :

   a) réaction d'un composé organo-magnésien de formule $R^1MgR^2$ dans laquelle $R^1$ et $R^2$ sont des radicaux alkyle identiques ou différents avec 2 à 12 atomes de carbone, avec 0,5 à 2,5 moles d'un hydrocarbure chloré aliphatique primaire, par rapport à 1 mole du composé organo-magnésien, à une température de 30 à 110°C,
   b) traitement de la suspension ainsi obtenue par un donneur d'électrons dans une quantité de 0,1 à 1 mole par mole de magnésium contenu dans la matière solide, à une température de 0 à 100°C, et
   c) réaction de la matière support ainsi obtenue avec un composé de formule $MX_m(OR^5)_{4-m}$ dans laquelle M représente le titane ou le zirconium, $R^5$ représente un radical alkyle avec 2 à 10 atomes de carbone, X est un atome d'halogène et m est un nombre entier de 0 à 4, dans une quantité de 0,5 à 2 moles par mole de magnésium contenu dans la matière support, à une température de 30 à 120°C.

2. Procédé selon la revendication 1, caractérisé en ce qu'on met en oeuvre la réaction entre un composé organomagnésien avec un hydrocarbure chloré aliphatique primaire en présence d'un composé organique d'aluminium, de formule $AlR^3_n(OR^4)_{3-n}$, dans laquelle $R^3$ et $R^4$ représentent des radicaux alkyle identiques ou différents avec 1 à 8 atomes de carbone et n vaut 0, 1, 2 ou 3, ou le produit de réaction des trialkylaluminium ou des hydrures de dialkylaluminium avec des dioléfines contenant de 1 à 6 atomes de carbone, dans une quantité allant jusqu'à 0,15 mole du composé organique d'aluminium par rapport à 1 mole du composé organo-magnésien.

3. Procédé selon la revendication 1, caractérisé en ce qu'on utilise en tant que composé organo-magnésien un composé de formule $[(n\text{-}C_4H_9)_{1,2\text{-}1,7}(n\text{-}C_8H_{17})_{0,3\text{-}0,8}Mg]$.

4. Procédé selon la revendication 1, caractérisé en ce qu'on utilise comme donneur d'électrons le sulfite de diéthyle ou le diéthoxydiméthylsilane.

5. Procédé selon la revendication 1, caractérisé en ce qu'on utilise le $TiCl_4$.